# EUROPÄISCHE PATENTANMELDUNG

(11) **EP 0 878 351 A1**
(43) Veröffentlichungstag der Anmeldung: **18.11.1998**
(21) Anmeldenummer: 97108050.2
(22) Anmeldetag: 16.05.1997
(51) Int. Cl.: B60P 7/12, B65D 71/04

(54) **Vorrichtung und Verfahren zum Sichern von zylindrischem Ladegut**

(71) Anmelder: Voggenberger Spedition u. Transport GesmbH, 5261 Uttendorf (AT)
(72) Erfinder: Reinthaler, Franz, 5272 Treubach (AT)
(74) Vertreter: Strych, Werner Maximilian Josef, Dr.

(57) **Zusammenfassung**

Die Erfindung betrifft ein Verfahren sowie eine Vorrichtung zur Ladungssicherung von im wesentlichen zylindrischen Stückgut mit stirnseitiger Öffnung, also beispielsweise Papierrollen (1) mit hohlem Wickelkern, auf der Ladefläche (8) eines Fahrzeuges (6) durch welches schnell und zu geringen Kosten eine zuverlässige Ladungssicherung mittels Spanngurten (7) erreichbar ist. Die Sicherung erfolgt mittels wenigstens eines am Fahrzeug befestigten Spanngurtes (7), wobei zwischen Spanngurt (7) und Ladegut im Bereich der Außenkanten wenigstens ein Kantenschutz (10) zwischengelegt ist, wobei wenigstens einen Fortsatz (11) zum Eingreifen in die stirnseitige Öffnung (2) aufweist sowie wenigstens einen Steg, welcher Kantenschutz (10) und Fortsatz (11) miteinander verbindet.

## Beschreibung

### I. Anwendungsgebiet

Die Erfindung betrifft ein Verfahren sowie eine Vorrichtung zur Ladungssicherung von im wesentlichen zylindrischen Stückgut mit stirnseitiger Öffnung, also beispielsweise Papierrollen mit hohlem Wickelkern etc.

Im folgenden wird dabei vorzugsweise direkt von Papierrollen gesprochen, obwohl auch Blechcoils, tonnenförmiges Stückgut und Ähnliches auf diese Art und Weise gesichert werden können.

### II. Technischer Hintergrund

Derartiges Ladegut wird aus Gründen des Gewichts und der ohnehin großen Abmessungen auf den Ladeflächen von Eisenbahnwaggons oder Lkws direkt aufgesetzt, und muß dort gegen Verrutschen, vor allem quer zur Fahrtrichtung, gesichert werden, was üblicherweise durch Spanngurte geschieht, die von der Ladefläche aus, an der sie fest verankert und gespannt sind, über das Ladegut, also die Papierrolle, gespannt wird. Bei Lkws erfolgt das Befestigen der Spanngurte meist an den Außenkanten der Ladefläche, also am Außenrahmenprofil des Chassis oder an entsprechenden Zurrschienen des Lkw.

Diese bis zu 5 t schweren Papierrollen können beim Transport auf der Ladefläche z. B. eines Lkw unterschiedlich orientiert sein: bei stehendem Transport, also mit der Stirnseite nach unten bzw. oben weisend, werden sehr große Papierrollen einzeln in Fahrtrichtung hintereinander auf der Ladefläche angeordnet. Die vorderste Papierrolle stützt sich dabei an der Stirnwand der Ladefläche ab, und die nachfolgenden Rollen stützen sich in Längsrichtung jeweils an der vorherigen Rolle ab. Die Spanngurte verlaufen dabei quer zur Fahrtrichtung über die Mitte, also auch über das Zentrum der Rolle.

Bei kleineren Papierrollen können diese quer zur Fahrtrichtung in z. B. zwei Reihen nebeneinander angeordnet werden, oder die Rollen werden versetzt, also entlang einer in Fahrtrichtung verlaufenden Zickzacklinie auf der Ladefläche angeordnet. Auch eine Anordnung in zwei Schichten übereinander liegend oder stehend, lagenweise versetzt oder exakt übereinander ist üblich, wobei die Rollen direkt aufeinandergelegt werden und das Verspannen von der Ladefläche aus nur über die oberste Lage der Rollen hinweg geschieht. Auch bei in Fahrtrichtung nebeneinandergestellten Rollen wird mit einem Spanngurt von links nach rechts durchgehend über alle nebeneinanderstehenden Rollen gespannt.

Eine andere Transportweise ist der liegende Transport, bei dem die Papierrollen mit ihrer Mantelfläche auf der Ladefläche aufliegen. Dabei kann die Achse der Papierrolle quer zur Fahrtrichtung angeordnet sein oder auch parallel zu dieser. In jedem Fall muß ein Wegrollen der Papierrollen durch entsprechende Unterlegkeile etc. zuverlässig abgesichert sein. Zusätzlich erfolgt wiederum die Verspannung über den höchsten Punkt jeder Papierrolle hinweg mittels der üblichen Spanngurte.

Das Problem der Ladungssicherung mittels Spanngurten besteht darin, daß die Spanngurte - egal ob die Papierrollen liegen oder stehen - immer nur über den Punkt des größten Durchmessers der Papierrolle hinweg gespannt werden, und von dort aus leicht nach vorne oder hinten abrutschen können, wodurch die Ladungssicherung aufgehoben wird. Zusätzlich wird die Papierrolle in dem Bereich, in dem der Spanngurt unter Druck an ihr anliegt, durch diesen Spanndruck und zusätzlich die Wirkung der Erschütterungen des Fahrbetriebes beschädigt.

### III. Darstellung der Erfindung

### a) Technische Aufgabe

Es ist daher die Aufgabe gemäß der Erfindung, eine Vorrichtung sowie ein Verfahren zu schaffen, durch welches schnell und zu geringen Kosten eine zuverlässige Ladungssicherung mittels Spanngurten erreichbar ist.

### b) Lösung der Aufgabe

Diese Aufgabe wird durch die kennzeichnenden Merkmale der Ansprüche 1 und 15 gelöst. Vorteilhafte Ausführungsformen ergeben sich aus den Unteransprüchen.

Dadurch, daß die Vorrichtung einerseits einen Kantenschutz aufweist und andererseits einen Fortsatz, der formschlüssig in die stirnseitige Öffnung des Ladegutes, also meist den hohen Wickelkern einer Papierrolle, dessen Durchmesser zwischen ca. 7 und knapp ca. 15 cm schwankt, eingreift, und die beiden Teile über einen Steg verbunden sind, wird einerseits eine Beschädigung der Kante der Papierrolle durch den Gurt verhindert und andererseits auch ein Wegrutschen des Spanngurtes aus der Sollposition, was besonders zuverlässig durch Vorsprünge oder andere Führungselemente an der Vorrichtung bewirkt wird, die eine Lageveränderung des Spanngurtes quer zu dessen Längsrichtung verhindern. Zusätzlich erstreckt sich bei auf der Stirnfläche stehenden Papierrollen die Vorrichtung über den gesamten Durchmesser der Papierrolle, so daß wegen der Fixierung im Zentrum, im Wickelkern, eine seitliche Auslenkung auf der einen Seite des Umfanges durch die dafür notwendige Ausrichtung in Gegenrichtung auf der anderen Seite des Umfanges verhindert wird, indem die Vorrichtung entsprechend biegesteif ausgebildet ist.

Dies gilt vor allem bei einer geteilten Ausführung der Vorrichtung in zwei Hälften, die sich jeweils vom Zentrum zum Außenumfang einer Papierrolle erstrecken, wobei für stehende Papierrollen die beiden Hälften dann miteinander an derselben Papierrolle eingesetzt werden, wenn an einer Längsposition der Ladefläche nur eine Papierrolle steht. In diesem Fall wird vorzugsweise durch eine formschlüssige Verbindung zwischen den Hälften einerseits ein einfaches Zusammensetzen zur Gesamtvorrichtung erzielt und andererseits eine knickfeste Ausbildung der Verbindung der beiden Hälften, wobei insbesondere ein Zusammenschieben einer hinterschnittenen Form, wie etwa einer Schwalbenschwanzform etc. quer zur Längserstreckung der Vorrichtung bevorzugt wird, und zwar auch quer zur Ebene des darauf aufzulegenden Spanngurtes.

Vorzugsweise sind dabei die beiden Hälften der Vorrichtung identisch ausgebildet, um zwei beliebige Teile immer zur ganzen Vorrichtung zusammenkombinieren zu können.

Die einzelne Hälfte ist dabei insbesondere längenveränderlich ausgeführt, um die Vorrichtung bei Rollen mit unterschiedlichem Durchmesser anwenden zu können. Vorzugsweise besteht sie dabei aus einem Oberteil und einem Unterteil, die längsverschieblich teleskopierbar ineinander geführt sind, und wobei am Unterteil der in den Wickelkern eingreifende Fortsatz und am Oberteil der an der Außenkante der Papierrolle anliegende Kantenschutz vorzugsweise einstückig angeformt ist. Dadurch können Unterteil und Oberteil jeweils als Spritzgußteil kostengünstig aus Kunststoff hergestellt werden.

Dabei sind die Fortsätze so geformt und dimensioniert, daß bei einer aus zwei Hälften zusammengesetzten Gesamtvorrichtung der sich ergebende Gesamtfortsatz aus den Fortsätzen der beiden Hälften insgesamt auch noch in die kleinste Wickelkern-Öffnung eingesetzt werden kann.

Bei größerem Wickelkern besteht eine Spielfreiheit, die jedoch nicht ausreicht, um ein Abrutschen des Gurtes trotz der Vorrichtung zu ermöglichen. Vorzugsweise ist der Spanngurt, der entlang des Steges auf diesem aufliegt, nicht nur durch seitliche Fortsätze geführt, sondern wird von Laschen, die ein geschlossenes Profil bilden, vollständig umgriffen. Dabei wird - nach oder vor dem Ansetzen der Vorrichtung an der Papierrolle - der Spanngurt mit seinem freien Ende durch diese Laschen hindurchgefädelt, und in die Spannratsche des anderen Gurtteiles, die wiederum am Fahrzeug befestigt ist, eingeführt und gespannt.

Damit trotz der Teleskopierbarkeit von Oberteil und Unterteil diese beiden Teile nicht voneinander getrennt und damit verloren werden können, befindet sich an einem der Teile ein Anschlag, der bei vollständig auseinandergezogener Position von Unterteil und Oberteil an einer der Laschen ansteht, und ohne aktive Verbiegung oder gar Zerstörung der Lasche die Trennung von Oberteil und Unterteil verhindert. Durch Anschrägung der Lasche auf der Gegenseite ist ein Einführen des einen Teiles in das andere Teil zu Beginn der Benutzung möglich.

Die Kante der Papierrolle wird nicht nur dadurch geschützt, daß der Kantenschutz eine deutlich größere Breite aufweist als die Breite des Spanngurtes, und damit die Flächenpressungen an der Papierrolle geringer werden. Vielmehr ist zusätzlich in der Innenkante des Kantenschutzes ein Freistich eingearbeitet, der die Außenkanten der äußersten Papierschichten frei enden läßt. Zusätzlich ist die Innenseite des Kantenschutzes konkav gekrümmt zur Anlage an der konvexen Mantelfläche der Papierrolle, wobei die Krümmung des Kantenschutzes - also in Blickrichtung der Achse der Papierrolle betrachtet - geringer ist als die Krümmung der Mantellänge der größten zu sichernden Papierrolle, so daß immer eine Anlage des Kantenschutzes im Mittelbereich an der Papierrolle gewährleistet ist.

Um die Spannkraft des Spanngurtes möglichst wenig durch Reibung gegenüber der Vorrichtung zu mindern, ist die Außenseite des Kantenschutzes, über welche der Spanngurt läuft, möglichst stark gerundet, also mit einem Radius von wenigstens 7 mm, vorzugsweise mehr als 12 mm. Zusätzlich ist - in der Aufsicht auf die Vorrichtung betrachtet - die Außenkante, über welche der Spanngurt umgelenkt wird, nicht ballig gekrümmt, sondern gerade, damit der Spanngurt über seine gesamte Breite auf diesem Außenradius aufliegt und gleichmäßig über die gesamte Breite des Spanngurtes anpreßt. Zusätzlich dienen die Laschen einerseits der Hindurchführung und damit Seitenführung des Spanngurtes, andererseits der verschiebbaren und teleskopierbaren Verbindung von Oberteil und Unterteil. Zusätzlich dient eine der Laschen, die in der Regel am Unterteil ausgebildet sind, als Anschlag für eine Nase am Oberteil, um zu verhindern, daß das Oberteil vollständig aus dem unterteil herausgezogen werden kann. Entlang des Steges ragen in dessen Längsrichtung verlaufend an den Rändern Stegwände auf, die ein seitliches Abrutschen des auf die Oberseite des Steges aufgelegten Spanngurtes verhindern. Der Steg kann zur Verbesserung der Steifigkeit auf der Unterseite verrippt sein.

Der Fortsatz an dem vom Kantenschutz abgewandten Ende der Vorrichtung, bei zweiteiliger, teleskopierbarer Ausführung vorzugsweise am Unterteil angeordnet, ist in der Aufsicht, also in Blickrichtung der Mittelachse der Papierrolle, etwa halbkreisförmig ausgebildet mit der Sehne des Halbkreises zum freien Ende hin. Über diese Sehne ragt auf der einen Seite der Mittellinie des Steges ein schwalbenschwanzförmiger Vorsprung vor, und im gleichen Abstand auf der anderen Seite ist eine äquivalent ausgebildete schwalbenschwanzförmige Ausbuchtung angeordnet. Auf diese Art und Weise können zwei gleich gestaltete Vorrichtungshälften, insbesondere deren Fortsätze, in einer Richtung quer zur Längserstreckung der Vorrichtung und auch quer zur Gurtebene in diesem Bereich mit den beiden schwalbenschwanzförmigen Vorsprüngen bzw. Ausnehmungen ineinandergeschoben werden, wodurch eine knickfeste, in Längsrichtung und zur Biegerichtung stabile Verbindung entsteht, die bei eingezogenem und gespannten Spanngurt nicht gelöst werden kann.

Dadurch, daß - bei zweiteiliger, vorzugsweise teleskopierbarer Ausführung - der Kantenschutz vorzugsweise am Oberteil angeordnet ist, liegt die Außenkante des Kantenschutzes, über welche der Spanngurt gelegt wird und dessen Kraft auf die Außenkante der Papierrolle einwirkt, nicht niedriger, sondern zumindest gleich hoch, wenn nicht gar höher als derjenige Bereich der Vorrichtung, in dem der Fortsatz angeordnet ist, der sich dann am Unterteil befindet. Dadurch ist zuverlässig sichergestellt, daß der Druck des Spanngurtes primär, insbesondere ausschließlich, auf den Kantenschutz und damit die Außenkanten der Papierrolle wirken, und keine Anpreßkraft auf den Zentralbereich, also den Mittelkern, der Papierrolle.

Bei einer Ausführungsform der Vorrichtung, in der diese einerseits aus zwei Hälften, vorzugsweise identischen Hälften, besteht, und andererseits jede dieser Hälften wiederum zweiteilig, nämlich bestehend aus teleskopierbarem Oberteil und Unterteil, besteht, muß - je nach Anwendungsfall - der Bediener ggf. zunächst die beiden Hälften durch Zusammenstecken deren Fortsätze formschlüssig zu einer Einheit verbinden, als nächstes den so entstandenen Gesamtfortsatz aus den beiden hälftigen Fortsätzen in die stirnseitige Öffnung der Papierrolle oder des sonstigen Ladegutes einstecken. Vorher oder anschließend wird durch Zusammenschieben oder Auseinanderziehen der beiden Hälften, also von Oberteil und Unterteil jeder der Hälften, der dort befindliche Kantenschutz in Anlage an die Außenkante der Papierrolle gebracht.

Das Einlegen bzw. Einfädeln des Spanngurtes kann nunmehr anschließend stattfinden oder bereits nach dem Zusammenstecken der beiden Hälften der Vorrichtung geschehen sein.

Als letzten Arbeitsgang wird das freie Ende des Spanngurtes in eine Spanneinheit eingeführt und diese Spanneinheit zum Festspannen des Spanngurtes benutzt, wodurch der Spanngurt fest auf die Außenseite der Vorrichtung und insbesondere auf die Außenseite des Kantenschutzes der Vorrichtung gepreßt wird und dadurch die Papierrolle zuverlässig gegen die Ladefläche drückt.

Je nach Anwendungsfall werden die beiden Hälften nicht zu einer Gesamtvorrichtung zusammengesteckt, sondern separat an den jeweils außenliegenden, also unterschiedlichen Papierrollen aufgesteckt oder auch auf unterschiedlichen Stirnseiten derselben, liegenden Papierrolle, um in dieser Anordnung durch beide Hälften den gleichen Spanngurt hindurchzuziehen und festzuspannen.

### c) Ausführungsbeispiele

Eine Ausführungsform gemäß der Erfindung sowie einige Anwendungsfälle sind im folgenden anhand der Figuren beispielhaft näher beschrieben. Es zeigen:
- Fig. 1:: eine Seitenansicht einer erfindungsgemäßen Vorrichtung zum Sichern von im wesentlichen zylindrischen Ladegut,
- Fig. 2:: eine Aufsicht auf eine erfindungsgemäße Vorrichtung zum Sichern von im wesentlichen zylindrischen Ladegut, bestehend aus zwei identischen, zusammengesetzten Hälften in Fig. 1,
- Fig. 3:: eine Seitenansicht eines Unterteils der erfindungsgemäßen Sicherungsvorrichtung,
- Fig. 4:: eine Aufsicht auf das Unterteil der erfindungsgemäßen Sicherungsvorrichtung in Fig. 3,
- Fig. 5:: eine Seitenansicht eines Oberteils der erfindungsgemäßen Sicherungsvorrichtung,
- Fig. 6:: eine Aufsicht auf das Oberteil der erfindungsgemäßen Sicherungsvorrichtung in Fig. 5,
- Fig. 7:: eine liegende Papierrolle,
- Fig. 8:: eine Stirnseitenansicht der Papierrolle in Fig. 7,
- Fig. 9:: eine stehende Papierrolle, die mittels einer Sicherungsvorrichtung gesichert ist,
- Fig. 10:: zwei nebeneinanderstehende Papierrollen, jeweils mittels der erfindungsgemäßen Sicherungsvorrichtung gesichert,
- Fig. 11:: eine liegende Papierrolle, die beidseitig mittels der erfindungsgemäßen Sicherungsvorrichtung gesichert ist,
- Fig. 12:: in zwei Lagen übereinander aufgesattelte Papierrollen, und
- Fig. 13:: eine in Fahrtrichtung liegende Papierrolle.

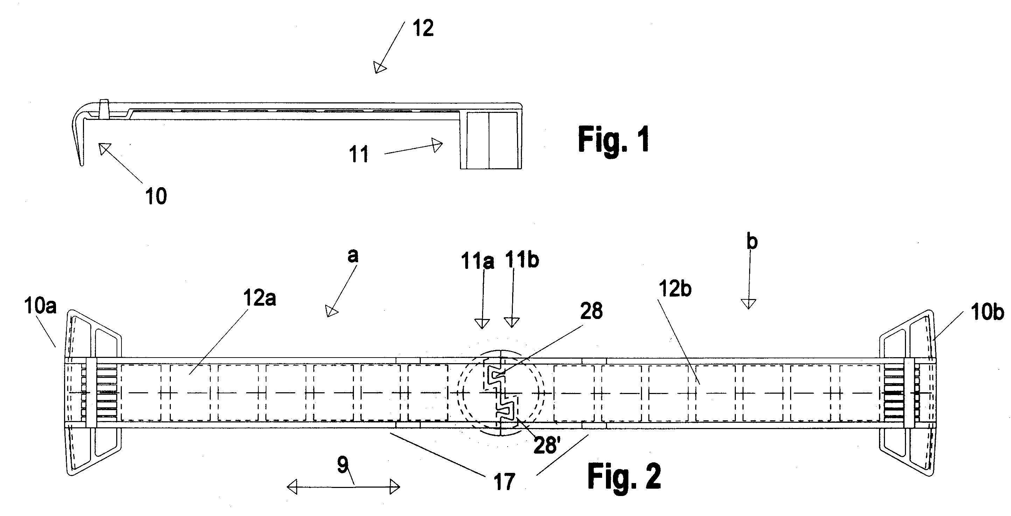

Fig. 1 zeigt eine Sicherungsvorrichtung mit einem Kantenschutz 10 und einem Fortsatz 11, die an den jeweiligen Enden eines dazwischenliegenden Steges 12 angeformt sind. Der Steg 12 kann teleskopierbar ausgebildet sein, so daß der Abstand zwischen dem Kantenschutz 10 und dem Fortsatz 11 an den jeweiligen Papierrollenradius angepaßt werden kann.

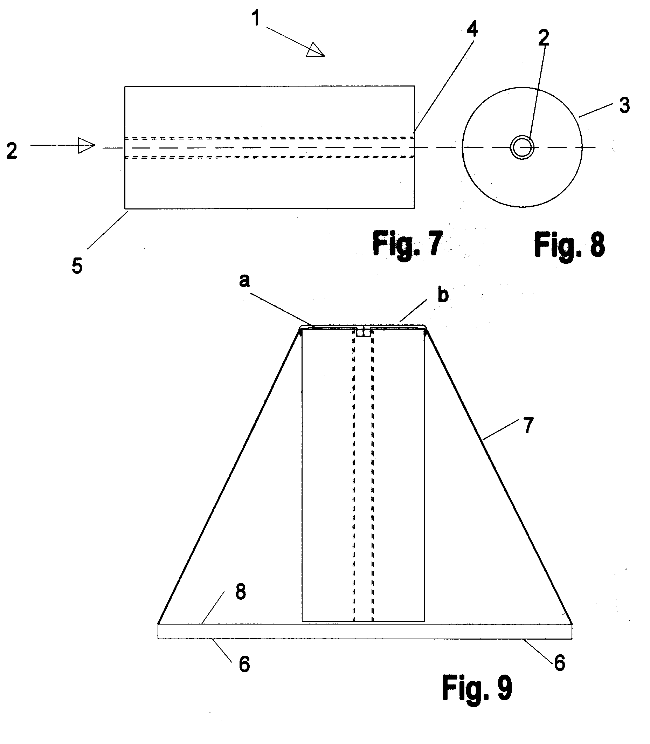

Diese Sicherungsvorrichtung wird üblicherweise an Papierrollen 1 verwendet, wie sie in Fig. 7 dargestellt sind. Bei ordnungsgemäßer Anbringung der Sicherungsvorrichtung wird der Kantenschutz 10 im Bereich der Kante 5 der Papierrolle 1 angelegt, während der in Fig. 1 nach unten zeigende Fortsatz 11 in eine stirnseitige Öffnung 2 im Kern der Papierrolle 1, die durch den hohlen Wickelkern gebildet wird, eingesetzt wird und der Steg 12 die aufgewickelten Papierbahnen an der Stirnseite in radialer Richtung überspannt.

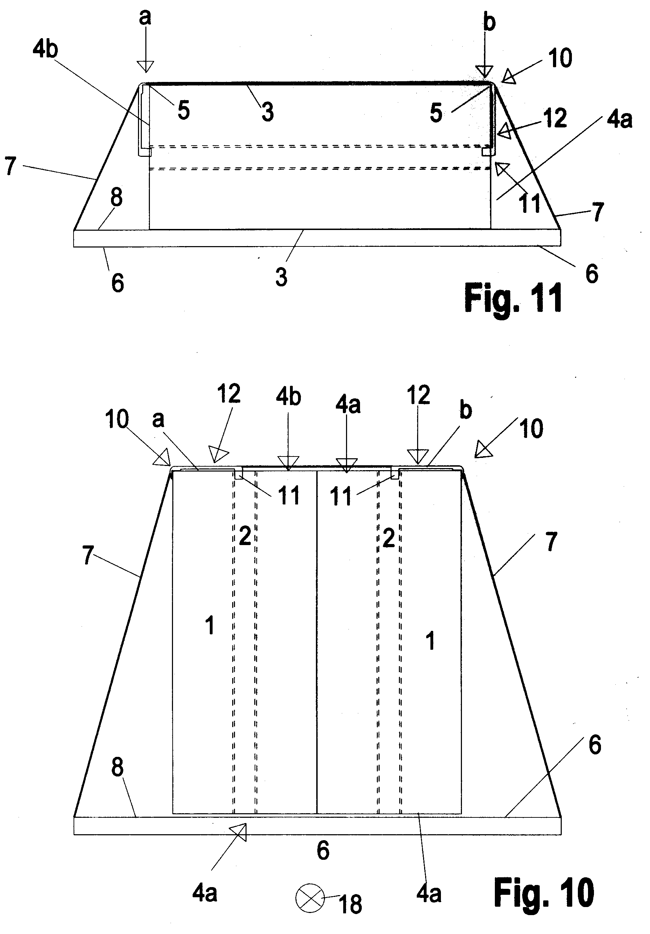

Eine Sicherungsvorrichtung dieser Ausführungsform wird insbesondere eingesetzt, wenn Papierrollen liegend, d. h. mit ihrer Mantelfläche 3 liegend transportiert werden, wie in Fig. 11 dargestellt ist.

An der auf einer Ladefläche 6 eines Lkw 8 liegenden Papierrolle 1 ist an beiden Seiten eine Sicherungsvorrichtung, wie oben beschrieben, angebracht, wobei jedoch der Verbindungssteg senkrecht nach oben, quer zur Axialrichtung der Papierrolle 1 gerichtet ist und der Kantenschutz 10 beidseitig jeweils am höchsten Punkt an der Kante 5 angreift. Ein Spanngurt 7 verläuft oberhalb der Papierrolle 1 waagerecht entlang deren Mantelfläche 3 und dann über den Kantenschutz 10 schräg nach unten zu den Außenkanten der Ladefläche 6, an denen er verspannt ist.

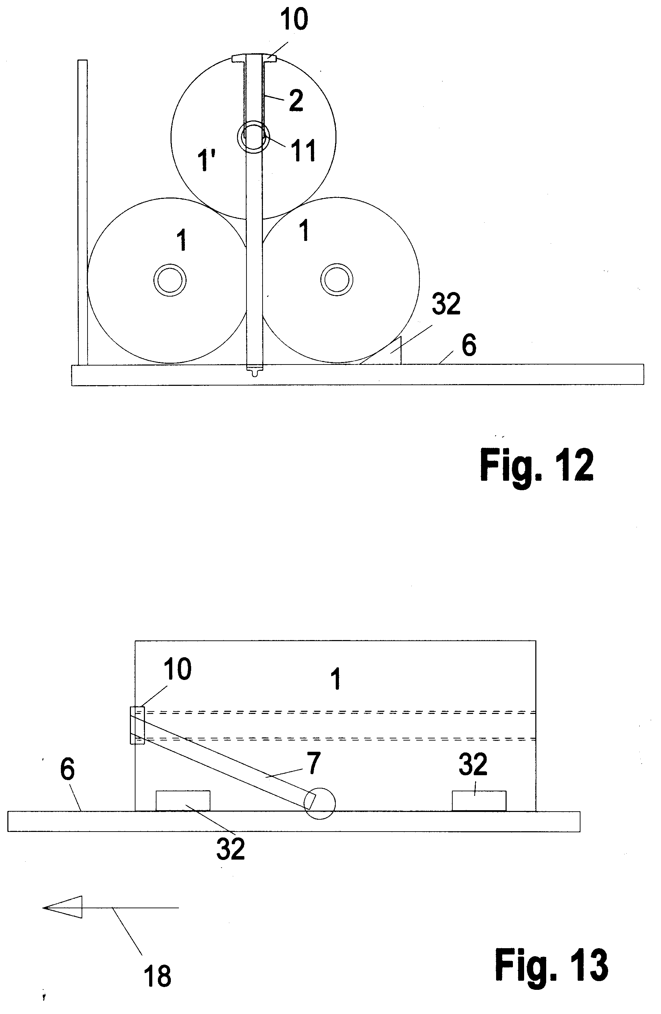

Im Gegensatz dazu zeigt Fig. 13 eine Papierrolle 1, die zwar ebenfalls liegend, jedoch mit ihrer Längsachse in Fahrtrichtung 18 orientiert, auf der Ladefläche 6 des Lkw 8 liegt. Diese Papierrolle 1 ist seitlich gegen Wegrollen in der Regel durch Keile 32 oder andere Vorbegrenzungen gesichert, muß jedoch gegen ein Nachvornerutschen - sofern sie nicht an einer festen Stirnwand etc. angelegt werden kann - ebenfalls durch einen Spanngurt 7 gesichert werden. Dies geschieht dadurch, daß über die vordere Stirnfläche der Papierrolle 1 eine aus zwei Hälften a, b bestehende zusammengesetzte Vorrichtung gesetzt wird, die also von der linken Außenseite über das Zentrum, in welchem sich die Fortsätze 11 befinden, bis zur gegenüberliegenden Außenkante der vorderen Stirnfläche erstreckt. Der Spanngurt 7 verläuft entlang dieser horizontal durch die Mitte der Stirnfläche verlaufenden Vorrichtung, und von dort, also von dem jeweiligen, an der Seite befindlichen Kantenschutz 10 der Vorrichtung aus schräg nach hinten unten, wo mittels entsprechender Haken etc. eine Verankerung mit dem Fahrzeug vorhanden ist.

Des weiteren kann diese Ausführungsform vorteilhaft eingesetzt werden, wenn mehrere Papierrollen 1 auf ihren Stirnflächen 4 stehend in mehreren Reihen nebeneinander angeordnet sind.

In Fig. 10 sind zwei auf ihren Stirnflächen 4 stehende Papierrollen 1 gezeigt, die mit jeweils einer Sicherungsvorrichtung a, b gesichert sind. Die Fortsätze 11 der Sicherungsvorrichtungen sind jeweils in die stirnseitige Öffnung 2 des Papierrollenkerns eingesetzt und der Kantenschutz 10 ist jeweils im Bereich der Außenkanten 5 aufgelegt, wobei die jeweiligen Stege 12 ausgehend von den Fortsätzen 11 in entgegengesetzte Richtungen radial nach außen zeigen. Die jeweiligen Stege 12 sind dabei quer zur Fahrtrichtung 18 des Pkws ausgerichtet, so daß die zwei Rollen 1 mit dem Spanngurt 7 quer zur Fahrtrichtung 18 abgespannt werden können.

Auch bei der in Fig. 12 dargestellten Lösung werden die beiden Sicherungsvorrichtungen a, b einzeln und nicht miteinander verbunden und direkt aneinander anschließend eingesetzt:

Dort liegen die Papierrollen 1 in zwei Schichten, sozusagen aufgesattelt, übereinander, indem die Papierrollen der zweiten Lage genau über der Fuge zwischen zwei Papierrollen der unteren Lage liegt. Die Papierrollen der unteren Lage liegen dabei ohne Abstand aneinander und sind gegen ein Auseinanderrollen gesichert, beispielsweise durch Anliegen an einer Stirnwand auf einer Seite und auf der anderen Seite mittels eines untergelegten Keiles 32, wenn die Achsrichtung der Papierrollen quer zur Fahrtrichtung orientiert ist.

Die oberen Papierrollen 1' sind dabei gesichert, indem vom Zentrum aus nach oben jeweils, also in den beiden Stirnseiten dieser oberen Papierrolle 1', eine Sicherungsvorrichtung a, b eingelegt ist.

Jede der Sicherungsvorrichtungen a, b reicht dabei vom hohlen Wickelkern im Zentrum der oberen Papierrolle 1', in welcher sich der Fortsatz 11 der Vorrichtung befindet, lotrecht nach oben, so daß der Kantenschutz 10 der Vorrichtung am höchsten Punkt der Umfangskante der Stirnfläche der oberen Papierrolle 1' anliegt. Der Spanngurt 7 läuft in der Regel senkrecht von der Ladefläche aus nach oben, also über das Zentrum und entlang des Steges 2 der Vorrichtung bis zum Kantenschutz 10, wo die Umlenkung in die Horizontale entlang der obersten Mantellinie der oberen Papierrolle 1' erfolgt, und an der gegenüberliegenden Stirnseite analog nach unten.

Eine andere Ausführungsform der Sicherungsvorrichtung in Fig. 2 besteht aus zwei identischen Hälften a, b, die an den Fortsätzen 11a, 11b miteinander verbunden sind. Wenigstens einer der Stege 12a, 12b ist dabei teleskopierbar (nicht gezeigt), so daß die beiden Kantenschützer 10a, 10b diametral gegenüberliegend an den jeweiligen Umfang der Papierrolle 1 angeglichen werden können.

Bei dem in Fig. 9 dargestellten Anwendungsbeispiel liegen die beiden zusammengesetzten Fortsätze 11a, 11b der beiden Hälften a, b gemeinsam in der stirnseitigen Öffnung 2 der Papierrolle 1 und greifen in den Kern der Rolle 1 ein. Der Platzbedarf der Fortsätze 11 ist dabei so bemessen, daß sie auch in kleine übliche Rollenkerne eingesetzt werden können.

Die Verbindung der beiden Hälften a, b ist so konstruiert, daß deren Fortsätze durch Zusammenstecken formschlüssig zu einer Einheit verbunden werden können, die auch mäßige Kräfte in Querrichtung, z. B. Knickkräfte, aufnehmen können und dadurch die Sicherungsvorrichtung stabilisieren.

Konstruktive Details der Vorrichtung sind den Figuren 1-6 zu entnehmen.

In Fig. 1 ist eine Vorrichtung in der Seitenansicht dargestellt, von der von einem in der Länge nicht veränderbaren Steg 12 in die gleiche Richtung am einen Ende der Kantenschutz 10 abragen und am anderen Ende der Fortsatz 11, der in die Öffnung 2 der Papierrolle bzw. des Ladegutes eingesteckt werden kann.

Diese in der Länge nicht veränderbare Ausführungsform der Vorrichtung ist in Fig. 2 in der Aufsicht dargestellt, und zwar in zwei miteinander gekoppelten Exemplaren. Diese beiden Hälften a, b sind dabei an ihrem Fortsatz 11 an der Stirnseite der Längsrichtung der Vorrichtung auf der einen Seite der Längsmitte mit einer hinterschnittenen Ausnehmung 28' und auf der anderen Seite mit einem analog positiv geformten Vorsprung 28 ausgestattet.

Dadurch ist es möglich, zwei identische Hälften a, b - wie in Fig. 2 dargestellt - in ihrer Längsrichtung 9 fluchten an den Fortsätzen 11 formschlüssig miteinander zu verbinden, indem der Vorsprung 28 des einen Vorsprunges 11a in die Ausnehmung 28' des anderen Vorsprunges 11b hineinpaßt. Zu diesem Zweck werden die beiden Hälften a, b an ihren fortsatzseitigen Stirnseiten in einer Richtung quer zur Längsrichtung 9 der Vorrichtungen und auch quer zur Ebene der Stege 12a bzw. 12b ineinander geschoben, wodurch - bei möglichst spielfreiem Ineinanderpassen von Vorsprüngen 28 und Ausnehmungen 28' - eine Verbindung entsteht, die in Längsrichtung 9 als auch quer hierzu, in der Ebene der Stege 12a, 12b formschlüssig und knickfest ist.

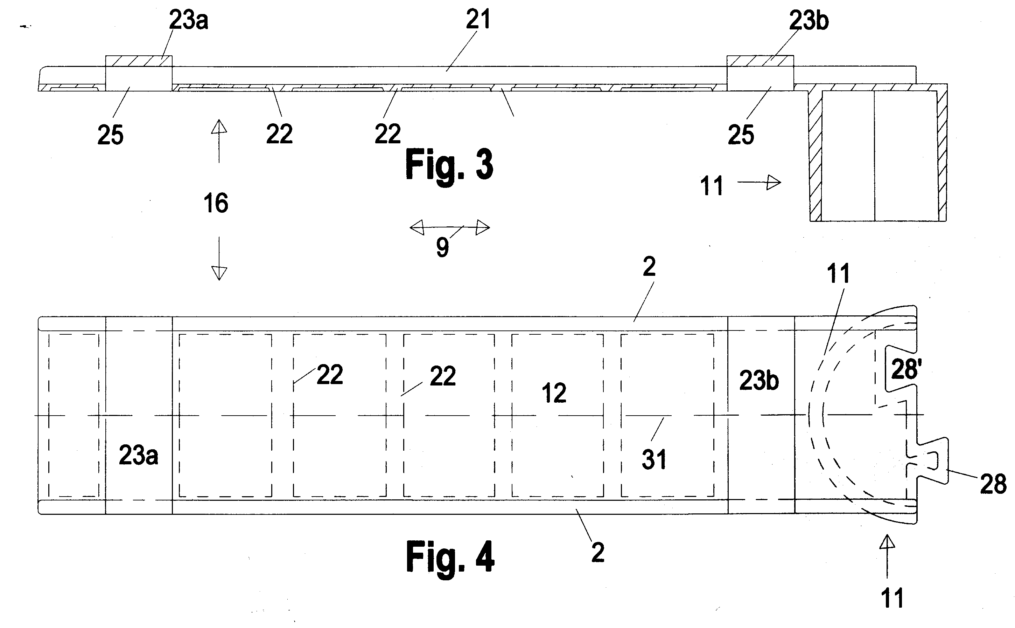

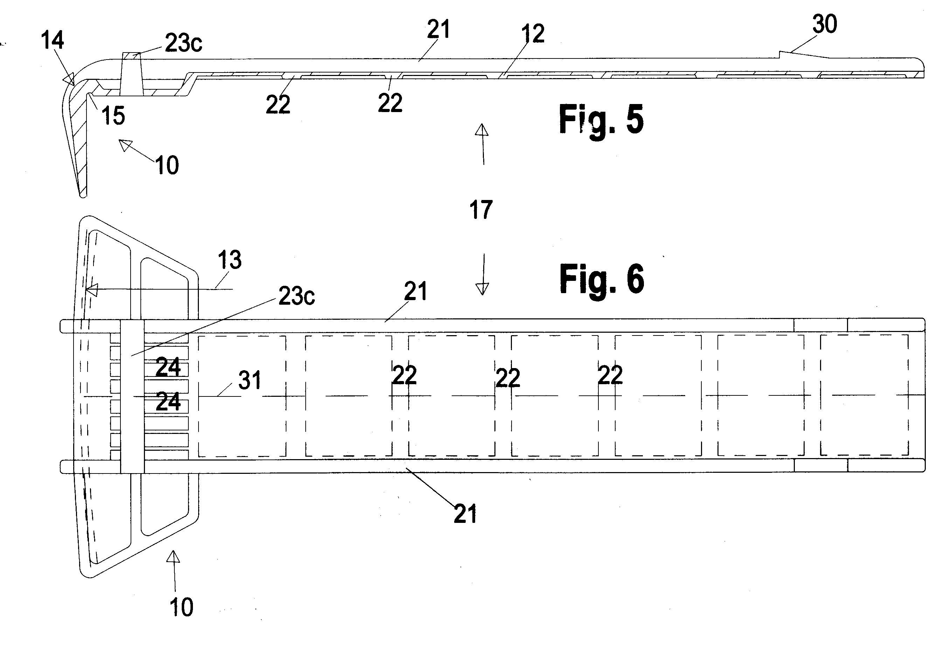

Um Papierrollen oder anderes ähnlich gestaltetes Ladegut mit unterschiedlichem Durchmesser bzw. Radius mit dieser Vorrichtung sichern zu können. und zwar bei den unterschiedlichen Anwendungsfällen wenigstens entsprechend den Figuren 9-11, kann die einzelne Vorrichtung, wie in Fig. 1 dargestellt bzw. in der Fig. 2 als Hälfte a und b bezeichnet, jeweils zweiteilig zum Zwecke der Längenveränderbarkeit ausgebildet sein, wie dies in den Figuren 3-6 dargestellt ist. Dabei besteht jede der Vorrichtungen aus einem Unterteil 16, wie in Fig. 3 und 4 in der Seitenansicht und Aufsicht dargestellt, und einem Oberteil 17, wie in Fig. 5 und 6 in Seitenansicht bzw. Aufsicht dargestellt.

Dabei ist der Steg 12 zweigeteilt, wobei das Unterteil der Figuren 3 und 4 am einen Ende den Fortsatz 11 trägt, der aus der Ebene des Steges 12 nach unten abragt. Der Steg 12 besteht dabei im wesentlichen aus einem plattenförmigen Material, welches zur Verbesserung der Stabilisierung an der Unterseite Querrippen 22 und auch an den Außenseiten befindliche, in Längsrichtung 9 verlaufende Längsrippen aufweist, da das gesamte Unterteil - und auch das gesamte Oberteil 17 - als Spritzgußteil, vorzugsweise aus Polypropilen, herstellbar sein soll.

Für die Funktion wichtiger ist dagegen die Oberseite des Steges 12, auf dem das Oberteil 17 geführt sein soll. Dies geschieht vor allem durch U-förmige Laschen 23a, 23b, die von Außenkante zu Außenkante auf der Oberseite des plattenförmigen Steges 12 sitzen und zusammen mit diesem eine allseits geschlossene Kontur bilden. Da eine der Laschen 23b nahe am fortsatzseitigen Ende angeordnet ist und die andere Lasche 23a am anderen Ende, wird durch diese Laschen 23a, 23b sowie die entlang der Längskanten aufragenden Stegwände 29, zwischen welchen sich dann das Oberteil 17 befindet, das Oberteil paßgenau in Längsrichtung 9 verschiebbar am Unterteil 16 geführt. Die beiden Teile sind zueinander in Längsrichtung 9 verschiebbar, und dennoch unverlierbar, indem im montierten Zustand am Oberteil 17 eine Nase 30 ausgebildet ist, die sich im montierten Zustand zwischen den Laschen 23a und 23b befindet, und beim vollständigen Auseinanderziehen von Oberteil 17 und Unterteil 16 an der vorderen Lasche 23a anliegt. Aufgrund einer einseitigen Anschrägung der Nase 30 kann bei der erstmaligen Montage das Oberteil 17 trotz der Nase 30 unter dieser Lasche 23a hindurchgeschoben werden, wobei diese leicht verformt wird, ein Herausziehen ist jedoch nur unter aktiver Vorverformung dieser Lasche 23a, und damit nicht im normalen Betrieb, möglich.

Am fortsatzseitigen Ende des Unterteiles 16 ragt der Fortsatz 11 von der Ebene des Steges 12 in die von den Laschen 23a, 23b entgegengerichtete Richtung ab. In der Aufsicht der Fig. 4 ist zu erkennen, daß der Fortsatz 11 dabei eine im wesentlichen halbkreisförmige Außenkontur besitzt, dessen Sehne den stirnseitigen Abschluß des Steges 11 bildet. In der geraden Sehne sind - auf der einen Seite der Längsmitte 31 - eine hinterschnittene Ausnehmung 28, insbesondere jeweils schwalbenschwanzförmig, ausgebildet. Aufgrund gleicher Gestaltung und gleichem Abstand von der Längsmitte 31 können zwei Unterteile 16 damit - wie am Beispiel der einstückigen Vorrichtung der Fig. 1 - wieder formschlüssig gekoppelt werden, wie am Beispiel der Fig. 1 in der Anwendung der Fig. 2 dargestellt.
Das zu dem Unterteil 16 passende Oberteil, an dessen einem Ende der Kantenschutz 10 ausgebildet ist, ist in Fig. 5 in der Seitenansicht dargestellt. Auch dabei ist wiederum der Steg 12 im wesentlichen als plattenförmiges Bauteil mit Querrippen 22 und Längsrippen an der Unterseite ausgebildet. Auch hier ragen auf der Oberseite Stegwände 21 nach oben, die diesmal jedoch eine andere Funktion besitzen, nämlich die Seitenführung der auf der Oberseite dieses Oberteiles 17 im montierten Zustand eingelegten Spanngurtes 7. Der lichte Abstand zwischen den oberseitigen Stegwänden 21 ist dabei etwas größer als die Breite eines üblichen Spanngurtes 7.

Am kantenschutzseitigen Ende ragt wiederum eine Lasche 23c - analog den vorbeschriebenen Laschen 23a und 23b des Unterteiles 16 - nach oben, durch welches ebenfalls der Spanngurt 7 hindurchgeführt werden muß.

Die bereits beschriebene Nase 30 zum unverlierbaren Verbinden von Oberteil 17 und Unterteil 16 befindet sich dagegen eher am anderen Ende, und ragt von den nach oben weisenden Stegwänden 29 aus nochmals nach oben. Die Höhe des Steges 12 - einschließlich der Stegwände 21 - in der Seitenansicht der Fig. 5 muß dabei geringer sein als die lichte Höhe der Laschen 23a, 23b des Unterteiles 16, durch welches sie hindurchgeführt werden müssen.

Der Kantenschutz 10 selbst, der einen aus der Ebene des Steges 12 im wesentlichen rechtwinklig nach unten, also von der Lasche 23c aus der Gegenrichtung abstrebenden, Schenkel darstellt, weist Besonderheiten auf: Zum einen ist der Kantenschutz 10 in der Aufsicht der Fig. 6 betrachtet wesentlich breiter als der Steg 12.

Zum anderen weist der Kantenschutz 10 in seinem Innenwinkel einen nach oben gerichteten Freistich 15 auf, um die äußersten Lagen der Paierrolle stirnseitig nicht zu beschädigen.

Darüber hinaus ist der nach unten vom Steg 12 abragende Schenkel des Kantenschutzes 10 nicht gerade, sondern zumindest auf seiner gegen die Papierrolle gerichteten Innenseite mit einer konkaven Krümmung 13 ausgestattet, die etwas geringer ist als die Krümmung der größten zu sichernden Papierrolle. Dadurch ist immer eine Anlage des Kantenschutzes 10 an der jeweiligen Papierrolle in der Mitte, also in der Nähe der Längsmitte 31, gewährleistet.

Zusätzlich ist der Kantenschutz 10 nahe am Innenwinkel, also der kantenschutzseitige Endbereich des Steges 12 zur Verstärkung mit Längsrippen 24 ausgestattet, die tiefer liegen als die Unterseite des Schenkels 12 im übrigen Bereich, so daß der übrige Bereich vom Unterteil 16 unterfahren wird.

Um keine zu starke Gleitreibung zwischen dem Spanngurt 7 und dem Oberteil 17, an dem dieser anliegt, zu erzeugen, ist die Außenkante des Kantenschutzes 10 - in Blickrichtung der Seitenansicht der Fig. 5 - über welche der Spanngurt 7 gelegt wird, stark gerundet und zwar mit einem Radius 14 von mindestens 7, vorzugsweise mindestens 12, idealerweise etwa 15 mm. Die Stegwände 21 auf der Oberseite des Steges 12 des Oberteiles 17 erstrecken sich um diesen Radius 14 herum entlang des runden abstrebenden Schenkels des Kantenschutzes 10 im wesentlichen bis zu dessen unteren, freien Ende hin.

Der Kantenschutz 10 ist weiterhin - in fluchtender Linie mit der Lasche 23c - außerhalb deren Breite, also außerhalb der Breite des Steges 12 - durch entsprechende Verrippung auf der Oberseite statisch verstärkt.

### BEZUGSZEICHENLISTE

- a, b: Hälften
- 1: Papierrolle
- 2: stirnseitige Öffnung
- 3: Mantelfläche
- 4: Stirnfläche
- 5: Außenkante
- 6: LKW
- 7: Spanngurt
- 8: Ladefläche
- 9: Längsrichtung der Vorrichtung
- 10: Kantenschutz
- 11: Fortsatz
- 12: Steg
- 13: Krümmung Innenseite
- 14: Radius Außenseite
- 15: Freistich Innenkante
- 16: Unterteil
- 17: Oberteil
- 18: Fahrtrichtung
- 19: Anschlag
- 21: Stegwand
- 22: Querrippen
- 23a, b, c: Lasche
- 24: Längsrippen
- 25: Durchbruch
- 26: Krümmung (in Richtung des gespannten Gurtes)
- 27a, b: obere, seitliche Auflageflächen
- 28: Vorsprung
- 28': Ausnehmung
- 29: Stegwand
- 30: Nase
- 31: Längsmitte

## Patentansprüche

1. Vorrichtung zum Sichern von im wesentlichen zylindrischem Ladegut mit stirnseitiger Öffnung, insbesondere Papierrollen mit hohlem Wickelkern, auf der Ladefläche (8) eines Fahrzeuges, insbesondere eines Lkw (6),
- mittels wenigstens eines am Fahrzeug befestigten Spanngurtes (7),
- wobei zwischen Spanngurt (7) und Ladegut im Bereich der Außenkanten (5) wenigstens ein Kantenschutz (10) zwischengelegt ist,
**dadurch gekennzeichnet, daß**
die Vorrichtung
- wenigstens einen Fortsatz (11) zum Eingreifen in die stirnseitige Öffnung (2) aufweist sowie
- wenigstens einen Steg (12), welcher Kantenschutz (10) und Fortsatz (11) miteinander verbindet.

2. Vorrichtung nach Anspruch 1,
**dadurch gekennzeichnet, daß**
die Vorrichtung aus zwei Hälften (a, b) besteht, wobei
- jede Hälfte (a, b) einen Kantenschutz (10), einen Steg (12) und einen Fortsatz (11) aufweist und
- die beiden Fortsätze (11a und 11b)der zwei Hälften (a, b) zusammen in eine stirnseitige Öffnung (2) des Ladegutes einführbar sind.

3. Vorrichtung nach Anspruch 1 oder 2,
**dadurch gekennzeichnet, daß**
die Vorrichtung, insbesondere deren Steg (12), längenveränderbar, insbesondere zweiteilig aus Unterteil (16) und Oberteil (17) bestehend, ausgebildet ist.

4. Vorrichtung nach Anspruch 3,
**dadurch gekennzeichnet, daß**
die Vorrichtung, insbesondere der Steg (12), stufenlos längenveränderbar, insbesondere teleskopierbar, ausgeführt ist.

5. Vorrichtung nach einem der vorhergehenden Ansprüche,
**dadurch gekennzeichnet, daß**
die Hälften (a, b) identisch sind.

6. Vorrichtung nach einem der vorhergehenden Ansprüche,
**dadurch gekennzeichnet, daß**
die Fortsätze (11a, 11b) zweier Hälften (a, b) formschlüssig verbindbar, insbesondere zusammensteckbar, insbesondere quer zur Längsrichtung (9) der Vorrichtung zusammensteckbar sind.

7. Vorrichtung nach einem der vorhergehenden Ansprüche,
**dadurch gekennzeichnet, daß**
der Kantenschutz (10) eine deutlich größere Breite entlang der Außenkante (5) des Ladegutes besitzt als die Breite des Spanngurtes (7).

8. Vorrichtung nach einem der vorhergehenden Ansprüche,
**dadurch gekennzeichnet, daß**
der Kantenschutz (10) auf seiner dem Ladegut zugewandten Innenseite eine konkave Krümmung (13) aufweist, mit welcher er an der Mantelfläche (3) des zylindrischen Ladegutes anliegt.

9. Vorrichtung nach Anspruch 8,
**dadurch gekennzeichnet, daß**
die Krümmung (13) geringer ist als die Außenkrümmung des größten zu spannenden Ladegutes.

10. Vorrichtung nach einem der vorhergehenden Ansprüche,
**dadurch gekennzeichnet, daß**
der Kantenschutz (10) an seiner Außenseite, über welche der Spanngurt (7) läuft, einen Krümmungsradius in Laufrichtung des Spanngurtes (7) von mindestens 7, vorzugsweise mindestens 12 mm aufweist.

11. Vorrichtung nach einem der vorhergehenden Ansprüche,
**dadurch gekennzeichnet, daß**
der Kantenschutz (10) an seiner Innenkante einen Freistich (15) zum Schutz der Außenkante des Ladegutes aufweist.

12. Vorrichtung nach einem der vorhergehenden Ansprüche,
**dadurch gekennzeichnet, daß**
der Kantenschutz am Oberteil (16) integral angeformt und der Fortsatz (11) am Unterteil (16) integral angeformt ist, und Oberteil (16) und Unterteil (17) unverlierbar miteinander verbunden sind.

13. Vorrichtung nach Anspruch 1,
**dadurch gekennzeichnet, daß**
die Vorrichtung zwei Kantenschutzteile (10), einen Fortsatz (1) sowie zwei Stege (12) umfaßt, wobei sich von dem mittigen Fortsatz (1) jeweils ein Steg in diametral auseinanderstrebenden Richtungen zu jeweils einem der beiden Kantenschutzteile (10) hin erstreckt.

14. Vorrichtung nach Anspruch 13,
**dadurch gekennzeichnet, daß**
die Vorrichtung einstückig ausgebildet ist.

15. Verfahren zum Sichern von im wesentlichen zylindrischem Ladegut mit stirnseitiger Öffnung, insbesondere Papierrollen mit hohlem Wickelkern, auf der Ladefläche eines Fahrzeugs, insbesondere eines Lkw, mittels wenigstens eines am Fahrzeug befestigten Spanngurtes (7), wobei mit der Stirnseite auf der Ladefläche stehendem zylindrischem Ladegut, bei der in der gleichen Längsposition der Ladefläche nur ein Stück des Ladegutes angeordnet ist, eine Zwischenlage-Vorrichtung zwischen Ladegut und Spanngurt (7) verspannt wird durch
a) Zusammenstecken der beiden Hälften (a, b) der Vorrichtung,
b) Einsetzen des Fortsatzes der Vorrichtung in die stirnseitige Öffnung des Ladegutes,
c) Anlegen des Kantenschutzes am Ladegut durch Zusammenschieben der Vorrichtung in dessen Längsrichtung in beiden Hälften, und
d) Einlegen und Spannen des Spanngurtes (7).

16. Verfahren zum Sichern von im wesentlichen zylindrischem Ladegut mit stirnseitiger Öffnung, insbesondere Papierrollen mit hohlem Wickelkern, auf der Ladefläche eines Fahrzeugs, insbesondere eines Lkw, mittels wenigstens eines am Fahrzeug befestigten Spanngurtes (7), wobei mit der Stirnseite auf der Ladefläche stehendem zylindrischem Ladegut, bei der in der gleichen Längsposition der Ladefläche mehrere Stücke des Ladegutes angeordnet ist, eine Zwischenlage-Vorrichtung zwischen Ladegut und Spanngurt (7) verspannt wird durch
a) Einsetzen jeweils einer Hälfte (a, b) der Vorrichtung in die jeweils äußere Hälfte des jeweils in Querrichtung äußersten Stückes des Ladegutes, wobei der Fortsatz in die stirnseitige Öffnung dieses seitlich äußersten Stückes des Ladegutes eingesetzt wird, und
b) Anlegen des Kantenschutzes am Ladegut durch Zusammenschieben der Hälften (a, b) der Vorrichtung gegen die seitlich äußerste Kante des Ladegutes, und
c) Einlegen und Spannen des Spanngurtes (7).

17. Verfahren zum Sichern von im wesentlichen zylindrischem Ladegut mit stirnseitiger Öffnung, insbesondere Papierrollen mit hohlem Wickelkern, auf der Ladefläche eines Fahrzeugs, insbesondere eines Lkw, mittels wenigstens eines am Fahrzeug befestigten Spanngurtes (7), wobei mit der Stirnseite auf der Mantelfläche liegendem zylindrischem Ladegut, bei der in der gleichen Längsposition der Ladefläche mehrere Stücke des Ladegutes angeordnet ist, eine Zwischenlage-Vorrichtung zwischen Ladegut und Spanngurt (7) verspannt wird durch
a) Einsetzen der Hälften (a, b) der Vorrichtung in die beiden einander gegenüberliegenden Öffnungen (2a, 2b) der einander gegenüberliegenden Stirnflächen (4a, 4b) des zylindrischen Ladegutes, so daß der Steg (12) von der stirnseitigen Öffnung jeweils nach oben ragt,
b) Anlegen des Kantenschutzes (10) an den höchsten Punkt der Außenkante des zylindrischen Ladegutes durch Herabschieben des Kantenschutzes nach unten bis zur Anlage am Ladegut, und
c) Einlegen und Spannen des Spanngurtes (7).
